# DEMANDE DE BREVET EUROPEEN

(11) **EP 2 781 895 A1**
(43) Date de publication de la demande: **24.09.2014**
(21) Numéro de dépôt: 14156265.2
(22) Date de dépôt: 21.02.2014
(51) Int. Cl.: G01F 11/26

(54) **Capsule doseuse à dose variable**

(30) Priorité: 18.03.2013 FR 1300613
(71) Demandeur: Catteau, Frédéric, 75006 Paris (FR)
(72) Inventeur: Catteau, Frédéric, 75006 Paris (FR)
(74) Mandataire: Regimbeau

(57) **Abrégé**

L'invention concerne une capsule doseuse (1) adaptée pour être montée sur un flacon (2) contenant un liquide à doser, la capsule (1) comprenant une paroi latérale entourant une cavité de dosage (C), une ouverture supérieure pour délivrer le liquide contenue dans la cavité de dosage (C), une ouverture inférieure, un bouchon (1) pour empêcher un échappement du liquide à doser depuis la cavité de dosage (C) via l'ouverture supérieure, une valve (12) comprenant des lèvres souples propre à prendre sélectivement une position fermée dans laquelle les lèvres souples interdisent un passage du liquide à doser entre la cavité de stockage et la cavité de dosage (C) via l'ouverture inférieure, ou une position ouverte dans laquelle les lèvres souples autorisent un passage du liquide à doser et de gaz entre la cavité de stockage et la cavité de dosage (C) via l'ouverture inférieure; et une bague de fixation solidaire de la paroi latérale et adaptée pour fixer la capsule (1) de façon étanche au flacon (2).

## Description

### DOMAINE TECHNIQUE GENERAL

L'invention concerne un bouchon doseur à dose variable et ajustable, ainsi qu'un procédé d'utilisation lié à tel bouchon monté sur un flacon.

### ETAT DE L'ART

Il existe plusieurs systèmes de dosage permettant de constituer une dose. Néanmoins, la plupart d'entre eux ne permettent pas de créer une dose ajustable, c'est-à-dire qu'une fois le volume du flacon transféré dans la cavité de dosage, il n'est plus possible de modifier celui-ci.

En outre, les systèmes de dosage intègrent parfois le doseur et le flacon, de sorte que, même s'ils ne sont pas indissociables, il faut un type de flacon spécial pour un doseur donné.

Inversement, les systèmes de dosage nécessitent parfois de détacher le doseur du flacon pour récupérer la dose, ce qui impose d'effectuer des manipulations avec du liquide dans le flacon et dans le doseur, d'où des risques de projection, de salissure, de dégagements gazeux, qui peuvent mettre en danger la sécurité de l'opérateur.

De plus, la dose n'est généralement pas ajustable, dans la mesure où si l'opérateur verse trop de liquide dans le doseur, il n'est pas toujours possible de modifier cette quantité *a posteriori,* ce qui peut engendrer du gaspillage ou une perte d'efficacité du produit dosé à cause d'un mauvais dosage.

Les systèmes doseurs présent dans l'art antérieur présentent ainsi des défauts que l'invention souhaite pallier.

### PRESENTATION DE L'INVENTION

Pour cela l'invention propose une capsule doseuse, adaptée pour être montée sur un flacon comprenant une cavité de stockage contenant un liquide à doser, la capsule doseuse comprenant :
- une paroi latérale entourant une cavité de dosage, la paroi comprenant une partie inférieure et une partie supérieure ;
- une ouverture supérieure dans la partie supérieure pour délivrer le liquide contenu dans la cavité de dosage,
- une ouverture inférieure dans la partie inférieure,
- un bouchon adapté pour être fixé sur la paroi latérale de manière à empêcher un échappement du liquide à doser depuis la cavité de dosage via l'ouverture supérieure,
- une valve comprenant des lèvres souples propre à prendre sélectivement
   ■ une position fermée dans laquelle les lèvres souples interdisent un passage du liquide à doser entre la cavité de stockage et la cavité de dosage via l'ouverture inférieure, lorsqu'un écart de pression de part et d'autre des lèvres souples, en valeur absolue, est inférieure à un écart de pression seuil est appliqué sur les lèvres souples ; ou
   ■ une position ouverte dans laquelle les lèvres souples autorisent un passage du liquide à doser et de gaz entre la cavité de stockage et la cavité de dosage via l'ouverture inférieure lorsqu'un écart de pression de part et d'autre des lèvres souples, en valeur absolue, supérieur à l'écart de pression pression seuil est appliqué sur les lèvres souples ; et
- une bague de fixation solidaire de la paroi latérale et adaptée pour fixer la capsule doseuse de façon étanche au flacon.

Ainsi, grâce à la valve, la dose est ajustable précisément et permet de rectifier le volume en réduisant ou augmentant la quantité dosée.

Avantageusement, la capsule comprend les caractéristiques suivantes, prises seules ou en combinaison :
- le bouchon obture l'ouverture supérieure de façon étanche aux gaz,
- le bouchon comprend un orifice de dégazage et une membrane semi-perméable, étanche au liquide à doser et perméable aux gaz, ladite membrane obturant l'orifice de dégazage,
- la bague comprend un filet interne, le filet interne permettant de visser la capsule doseuse sur le flacon,
- le bouchon comprend un filet interne et la paroi latérale comprend un filet externe, les filets interne et externe étant propres à coopérer pour visser le bouchon sur la paroi latérale,
- la paroi latérale comprend des graduations pour mesurer la quantité de liquide à doser contenu dans la cavité de dosage,
- la paroi latérale est en polycarbonate, en polyester ou en polypropylène clarifié,
- la bague de fixation et la paroi latérale sont formées en une seule pièce de matière,
- la bague et la paroi latérale sont formées en une seule opération de moulage,
- la valve est fixée à la partie inférieure de la paroi latérale par encliquetage ou par soudure ou par assemblage,
- la capsule doseuse comprend un capuchon propre à être fixé de manière amovible sur la valve pour étanchéifier les lèvres souples afin d'empêcher un passage de liquide à doser en cas d'ouverture de la valve,

Avec le bouchon membrane, le dispositif permet d'améliorer encore la précision de la dose et la rapidité d'ajustement de la dose, les échanges gazeux permettant de s'affranchir des différentiels de pression.

L'invention propose aussi un ensemble doseur comprenant un flacon comprenant une cavité de stockage contenant un liquide à doser, et une capsule doseuse telle que précédemment décrite.
Avantageusement :
- le flacon comprend un goulot présentant un filet et dans lequel la bague de fixation comprend un filet interne, le filet interne permettant de visser la capsule doseuse sur le goulot,
- le flacon comprend un corps formé en un matériau élastique.

L'invention propose aussi un procédé de dosage d'une quantité souhaitée de liquide à doser à l'aide d'un ensemble doseur tel que précédemment décrit dans lequel un opérateur effectue les étapes suivantes :
- E1 : positionnement de l'ensemble avec la cavité de stockage au-dessus de la cavité de dosage de sorte que le liquide de la cavité de stockage vienne au contact de la valve ;
- E2 : exercice d'une première pression sur le flacon tendant à diminuer un volume de la cavité de stockage, de sorte qu'une première quantité de liquide à doser traverse la valve et pénètre dans la cavité de dosage;
- E3 : positionnement de l'ensemble avec la cavité de stockage au-dessous de la cavité de dosage, la valve empêchant le liquide à doser contenu dans la cavité de retourner dans la cavité de stockage;
- E4 : retrait du bouchon et récupération du liquide à doser contenu dans la cavité de dosage via l'ouverture supérieure, notamment par versement.
Avantageusement, le procédé comprend les caractéristiques suivantes, prises seules ou en combinaison :
- après l'étape E2, l'opérateur effectue une étape de relâchement de la pression sur le flacon de sorte que le volume de la cavité de stockage augmente.
- après l'étape E3' entre les étapes E3 et E4, dans le cas où la première quantité de liquide à doser est supérieure à la quantité souhaitée, l'opérateur:
   ○ exerce une pression sur le flacon, de sorte que du gaz contenu dans la cavité de stockage traverse la valve ; puis relâche la deuxième pression sur le flacon générant une dépression dans la cavité de stockage, de sorte qu'une partie du liquide à doser contenu dans la cavité de dosage traverse la valve et retourne dans la cavité de stockage, et qu'il reste dans la cavité de dosage une deuxième quantité de liquide à doser,
- l'opérateur renouvelle l'étape E1 à la suite de l'étape E3' si la deuxième quantité de liquide à doser est inférieure à la quantité souhaitée.

Le procédé présenté permet ainsi un dosage précis et en limitant au maximum les risques pour l'opérateur.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1a et 1b illustrent une capsule doseuse conforme à l'invention montée sur un flacon ;
- Les figures 2a et 2b illustrent une capsule doseuse selon un premier mode de réalisation ;
- Les figures 3a, 3b et 3c illustrent une capsule doseuse selon un second mode de réalisation ;
- La figure 4 illustre la valve à lèvres souples élastiques à mémoire de forme ;
- Les figures 5a et 5b illustrent différents modes de réalisation de la partie inférieure de la capsule ;
- La figure 6 illustre les graduations sur la capsule doseuse ;
- Les figures 7 et 8 illustrent des étapes d'un procédé conforme à l'invention.

### DESCRIPTION DETAILLEE

### La capsule doseuse

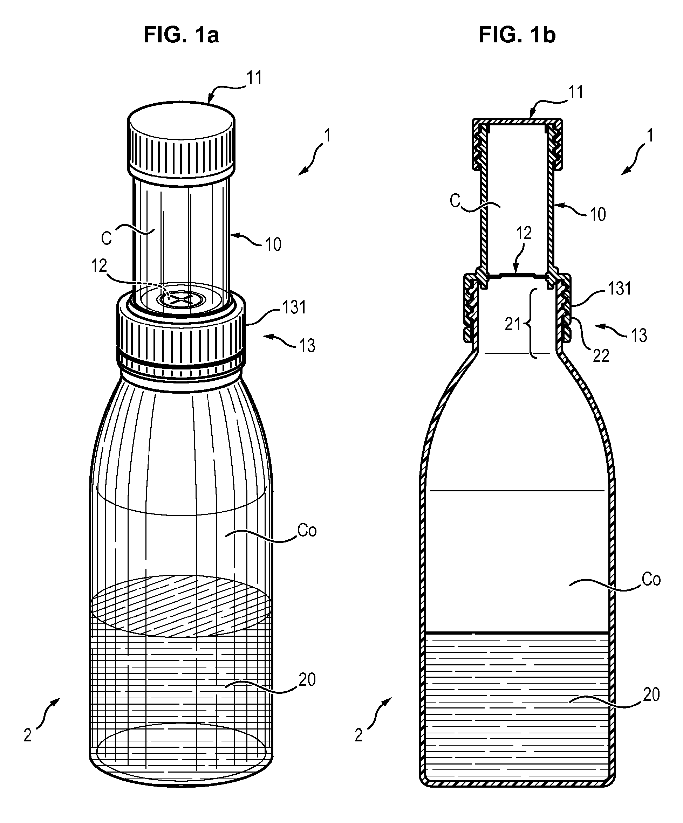

En relation avec les **figures 1a, 1b****,** **2a, 2b****,** **3a, 3b et 3c****,** une capsule doseuse 1 conforme à l'invention va être décrite.
La capsule doseuse est adaptée pour être fixée solidairement à un flacon 2, comme illustré sur les **figures 1a, 1b****.** Le flacon 2 comprend une cavité de stockage C₀ qui contient avantageusement un liquide à doser 20.

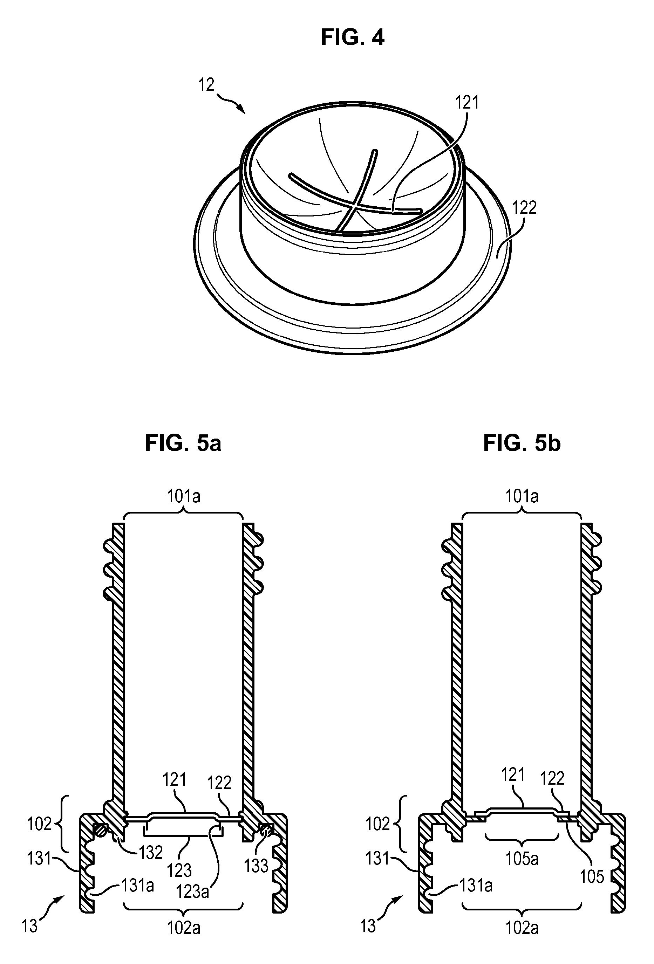

La capsule doseuse 1 comprend une paroi latérale 10 entourant une cavité de dosage C, une ouverture supérieure 101a et une ouverture inférieure 102a, un bouchon 11 et une valve 12 (voir **figure 4**).
La capsule doseuse 1 comprend en outre des moyens de fixation 13 permettant de fixer la capsule doseuse 1 au flacon 2.

La cavité de dosage C est apte à recevoir du liquide, typiquement du liquide à doser 20 issu du flacon 2.

### La paroi latérale

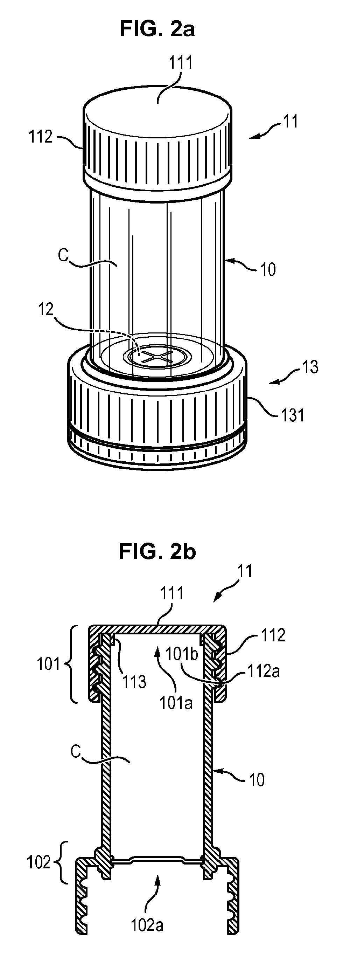

La paroi latérale 10 de la cavité de dosage C comprend une partie supérieure 101, définissant notamment l'ouverture supérieure 101a et une partie inférieure 102 définissant notamment l'ouverture inférieure 102a (voir **figure 2b**).
La paroi latérale 10 est préférablement de forme tubulaire ou de section rectangulaire.

La paroi latérale 10 est translucide, de préférence transparente, afin de pouvoir observer le niveau de liquide à l'intérieur de la cavité de dosage C. Pour cela, la paroi latérale 10 est typiquement en polycarbonate, en polyester ou en polypropylène clarifié.
Un procédé d'injection ou d'extrusion soufflage peut être utilisé. Alternativement, une paroi latérale 10 en verre est envisageable.

### Le bouchon

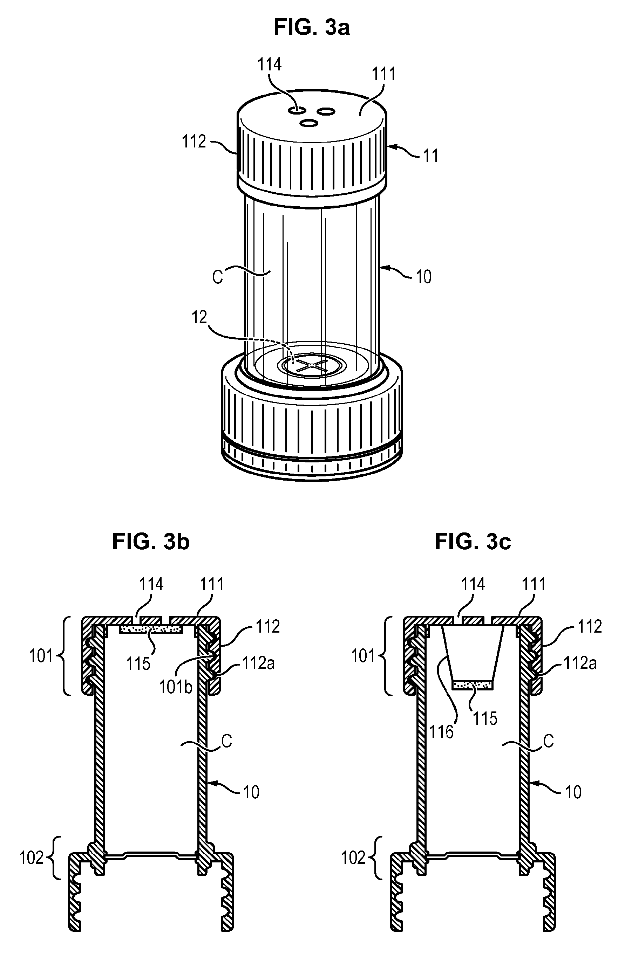

Au niveau de la partie supérieure 101 de la paroi latérale 10 se trouve le bouchon 11, adapté pour être fixé sur la paroi latérale 10 de manière à empêcher un échappement du liquide à doser 20 depuis la cavité de dosage C *via* l'ouverture supérieure.
Le bouchon 11 comprend une surface de fermeture 111 ainsi que, d'une façon préférentielle, une jupe externe 112, sensiblement orthogonale à ladite surface de fermeture 111. La jupe externe 112 comporte un filet interne 112a. De la même façon, la partie supérieure 101 de la paroi latérale 10 comporte un filet externe 101b complémentaire (voir **figures 2b****,** **3b**), de sorte que le bouchon 11 peut être vissé et dévissé à la paroi latérale 10 et ainsi respectivement obturer et libérer l'ouverture supérieure 101a.
En outre, le bouchon 11 peut comporter une jupe interne 113 adaptée pour venir en contact avec la partie supérieure 101 et limiter ainsi encore les probabilités de fuite (voir **figure 2b**).
Alternativement, le bouchon 11 peut être fixé par encliquetage contre la partie supérieure 101 de la paroi latérale 10, sans aucun filet (non représenté sur les figures).
Le bouchon 11 est typiquement en plastique moulé injecté.
Un joint de bouchon (non représenté sur les figures) peut également être prévu entre la partie supérieure 101 et le bouchon 11, afin d'assurer l'étanchéité aux liquides et/ou gaz.

Selon un premier mode de réalisation (voir **figures 2a, 2b**), le bouchon 11 est étanche aux fluides et aux gaz. La surface de fermeture 111 est alors composée d'un matériau étanche aux fluides et aux gaz. Typiquement, la surface de fermeture 111 et la ou les jupes sont moulées injectées en une seule pièce.

Selon un second mode de réalisation (voir **figures 3a, 3b, 3c**), le bouchon 11 est étanche aux fluides et perméable aux gaz. Pour cela, ladite surface de fermeture 111 comprend au moins un orifice de dégazage 114 traversant et ledit bouchon 11 comprend une membrane semi-perméable 115 qui obture ledit au moins un orifice de dégazage 114. La taille de l'orifice de dégazage 114 peut être variable.
La membrane semi-perméable 115 est étanche aux liquides mais perméable aux gaz. Elle comprend une couche filtrante poreuse, typiquement en un matériau hydrophobe tel que le polytétrafluoroéthylène (PTFE) expansé. La couche filtrante comprend des pores ayant une dimension comprise entre 1 et 50 microns par exemple. En outre, la membrane semi-perméable 115 peut comprendre une couche de support pour maintenir en place la membrane semi-perméable 115.
D'une façon préférentielle, quand le bouchon 11 est mis en place sur la partie supérieure 101 de la paroi latérale 10, la membrane semi-perméable 115 se trouve à l'intérieur de la cavité de dosage C. Alternativement, la membrane semi-perméable 115 peut faire partie d'un plot support 116 fixé au bouchon 11 et visant à mettre la membrane semi-perméable 115 en déport par rapport à la surface de fermeture 111.

### La valve

En référence aux **figures 4, 5a, 5b****,** au niveau de la partie inférieure 102 de la paroi latérale 10 se trouve la valve 12 qui obture l'ouverture inférieure 102a de façon étanche aux liquides et aux gaz.
La valve 12 possède des lèvres souples 121 élastiques propres à prendre sélectivement une position fermée dans laquelle les lèvres souples 121 interdisent un passage du liquide à doser 20 entre la cavité de stockage C₀ et la cavité de dosage C *via* l'ouverture inférieure 102a lorsqu'un écart de pression de part et d'autre des lèvres souples, en valeur absolue, inférieur à un écart de pression seuil est appliquée sur les lèvres souples 121 et une position ouverte dans laquelle les lèvres souples 121 autorisent un passage du liquide à doser et de gaz entre la cavité de stockage C₀ et la cavité de dosage C *via* l'ouverture inférieure 102a lorsqu'un écart de pression de part et d'autre des lèvres souples, en valeur absolue, supérieur à l'écart de pression seuil est appliqué sur les lèvres souples 121.
Les lèvres souples 121 sont dites à mémoire de forme.
L'écart de pression seuil dépend de la valve 12 et en particulier des propriétés mécaniques et chimiques des lèvres souples 121.
En outre, la valve 12 peut comprendre un support 122 qui comprend les lèvres 121. Le support 122 contribue à l'étanchéité de la valve 12.
La valve 12 est typiquement en polymère, tel que de la silicone.
La valve 12 est fixée à la partie inférieure 102 de la paroi latérale 10 (voir **figure 5a**), en particulier via le support 122 et notamment par assemblage ou par bi-injection.

Alternativement, la valve 12 peut être intégrée à un fond 105 situé au niveau de la partie inférieure 102 et sensiblement perpendiculaire à celle-ci (voir **figure 5b**). Le fond 105 présente un orifice 105a que les lèvres souples 121 de la valve 12 viennent obstruer. L'orifice 105a est ainsi assimilé à l'ouverture inférieure 101a mais typiquement de surface inférieure. La valve 12 est alors fixée au fond 105, en particulier grâce au support 122 par collage ou technique d'assemblage, par exemple.

En outre, la valve 12 peut comprendre un capuchon 123 propre à être fixé de manière amovible sur la valve 12 pour étanchéifier les lèvres souples 121 afin d'empêcher un passage de liquide à doser 20 en cas d'ouverture de la valve 12 (voir **figure 5a****).** Le capuchon 123 permet ainsi d'obturer complètement la valve 12. En effet, les lèvres souples 121 de la valve 12 peuvent, notamment en cas de mouvement de la capsule doseuse 1 ou d'une pression exercée sur la paroi latérale 10 laisser échapper du liquide à doser 20 contenu à l'intérieur de la cavité de dosage C. Le capuchon amovible 123 peut venir se fixer sur un élément d'attache 123a de la valve 12, de sorte que le capuchon amovible 123 étanchéifie complètement la valve 12. L'élément d'attache 123a comporte typiquement un filet de forme complémentaire à un filet présent sur le capuchon amovible 123. Alternativement, la fixation se fait par encliquetage.
Un tel capuchon 123 permettent de déplacer la capsule doseuse 1 avec du liquide à doser 20 à l'intérieur de la cavité de dosage C sans aucun risque de fuite.

### Les moyens de fixation

Les moyens de fixation 13 (voir **figures 5a, 5b**) comprennent une bague de fixation 131 dans le prolongement de la partie inférieure 102 de la paroi latérale 10. Les moyens de fixations 13 sont adaptés pour solidariser la capsule 1 de façon étanche au flacon 2.
Généralement, dans la section orthogonale à la bague de fixation 131, ladite bague de fixation 131 définit une forme circulaire, dont le diamètre est complémentaire à celui d'un goulot 21 du flacon 20.
D'une façon préférentielle, la bague de fixation 131 comprend un filet interne 131a, de forme complémentaire à un filet standard 22 présent généralement de façon standard sur le goulot 21 du flacon 2 (voir **figure 1b**).

La bague de fixation 131 est préférablement venue de matière avec la paroi latérale 10, ce qui signifie qu'elles constituent une seule et même pièce (voir **figure 5a, 5b****).**
La bague de fixation 131 et la paroi latérale 10 sont préférablement formées en une seule opération de moulage.
Alternativement, les moyens de fixations 13 comprennent des pinces ou des clamps, permettant d'attacher la bague de fixation 131 au goulot 21 du flacon 2. Alternativement, la bague de fixation 13 est solidarisée au goulot 21 du flacon 20 par encliquetage.

En outre, les moyens de fixation 13 peuvent comprendre des lèvres d'étanchéité 132 (voir **figure 5a, 5b****)** située à proximité de l'interface entre les moyens de fixations 13, en particulier la bague de fixation 131, et le flacon 2. Ces lèvres 132 jouent un rôle similaire à celui de la jupe interne 113 du bouchon 111.
Un joint d'étanchéité 133 peut être disposé au niveau du contact entre la bague de fixation 131 et le goulot 21 du flacon 2.
Le joint d'étanchéité 133 est typiquement annulaire ou circulaire et est fixé soit à la bague de fixation 131, soit aux lèvres d'étanchéité 132, soit à la valve 21, soit au fond 105, notamment par collage.
Typiquement, le joint d'étanchéité 133 est en polyéthylène expansé ou tout autre matériau compatible avec la nature du liquide contenu dans le flacon 2.

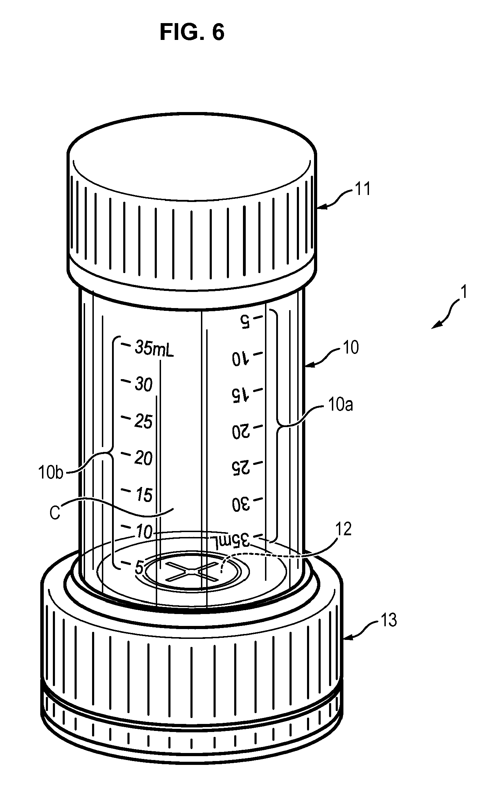

En référence avec la **figure 6****,** la paroi latérale 10 comprend une première graduation 10a commençant à 0 sensiblement au niveau du bouchon 11 et augmentant, typiquement de 5 en 5 mL, en direction de la valve 12 ou selon une échelle adaptée aux volumes que l'on souhaite doser.
La paroi latérale 10 comprend une deuxième graduation 10b commençant à 0 sensiblement au niveau de la valve 12 et augmentant, typiquement de 5 en 5 mL, en direction du bouchon 11, ou selon une échelle adaptée aux volumes que l'on souhaite doser.

Ces deux graduations permettent de mesurer un volume de liquide à l'intérieur de la cavité de dosage C quel que soit le sens d'utilisation de la capsule 1.

Selon d'autres modes de réalisation envisageables, la membrane semi-perméable 115 peut se situer sur la paroi latérale 10, ou bien le joint de bouchon permet une étanchéité aux fluides mais est perméable aux gaz.

Le volume de la cavité de dosage C dépend des utilisations que l'on désire. Typiquement, les volumes à doser sont compris entre 5 et 100 mL, ce qui signifie que la cavité de dosage C a typiquement un volume entre 5 et 100 mL. Néanmoins, un volume plus grand est envisageable.

### Procédé d'utilisation

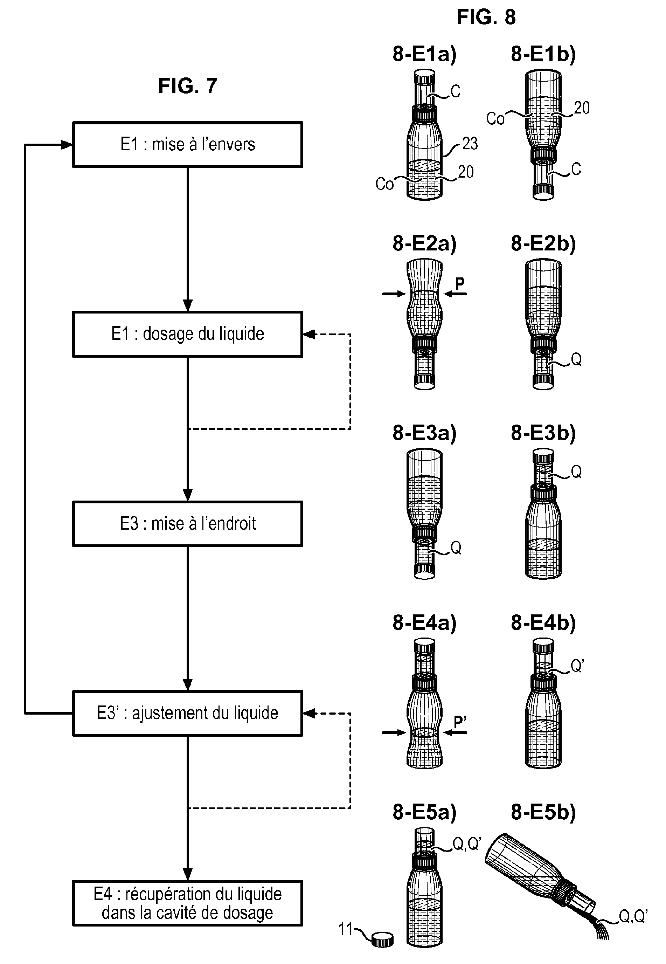

En référence aux **figures 6****,** **7****,** un procédé d'utilisation d'une capsule 1 telle que présentée précédemment et montée sur un flacon 2 va être décrit.
L'ensemble doseur 1,2 se réfère à la capsule 1 montée sur un flacon 2.
Il est possible de monter la capsule doseuse 1 sur n'importe quel type de flacon 2, pourvu simplement que la capsule doseuse 1 puisse se fixer au goulot 21 du flacon 2. Typiquement, n'importe quel flacon dont le goulot est fileté et de dimension complémentaire à celle définie par la bague de fixation 131 de la capsule doseuse 1 convient.

Le flacon 2 a un corps 23 formé en un matériau élastique, ce qui signifie que le corps 23 peut être comprimé sous l'effort d'une pression, typiquement avec la main d'un opérateur, et qu'il retrouve sa forme originale quand la pression cesse. Le corps 23 peut être qualifié de corps à mémoire de forme. Naturellement, la pression exercée par l'opérateur ne doit pas déplacer les limites de déformation élastique du corps 23 du flacon 2.

Le flacon 2 contient donc un liquide à doser 20 dans la cavité de stockage C₀, dont on souhaite prélever une quantité souhaitée Qs grâce à la capsule doseuse 1 précédemment décrite.
Le procédé et la capsule doseuse 1 trouvent avantageusement utilisation dans les domaines de la cuisine, du jardinage, du ménage, de la pharmacie, et plus généralement tout domaine où un besoin de doser un volume est présent.
Selon le type de liquide à doser 20 utilisé ou bien à la discrétion de l'opérateur, l'opérateur choisit s'il met le bouchon 11 étanche aux fluides et aux gaz ou le bouchon 11 avec la membrane semi-perméable 115.
Le procédé de réalisation d'une dose est le même quel que soit le mode de réalisation du bouchon 20. Les avantages d'une capsule avec bouchon 11 comprenant une membrane semi-perméable 115 seront explicités par la suite.

Dans une étape préliminaire, si la capsule 1 n'est pas préinstallée sur le flacon 2, l'opérateur monte la capsule doseuse 1 sur le flacon 2. Typiquement, il visse la capsule 2 sur le goulot 21 grâce au filet interne 131a et au filet standard 22 du goulot 21. L'opérateur vérifie que le bouchon 11 est fixé à la capsule doseuse 1, typiquement en vérifiant le vissage ou alors en vissant le bouchon 11. De la même façon, il vérifie que le capuchon amovible 123 est enlevé.
L'étanchéité de l'ensemble 1, 2 avec l'extérieur est assurée par les moyens de fixation 13, les lèvres d'étanchéité 132 et/ou le joint d'étanchéité 133, ainsi que par le bouchon 11.

Dans une étape **E1** dite de « mise à l'envers », l'opérateur positionne l'ensemble 1, 2 avec la cavité de stockage C₀ au-dessus de la cavité de dosage C de sorte que le liquide à doser 20 du flacon 2 vienne au contact de la valve 12 (voir **figures 8****-E1a, 8-E1b).** Grâce aux lèvres souples 121 élastiques, aucun liquide à doser 20 ne traverse la valve 12.

Dans une étape **E2,** l'opérateur exerce une première pression P sur le corps 23 du flacon 2, ladite pression P tendant à diminuer un volume de la cavité de stockage C₀ du flacon 2 de sorte que le liquide à doser 20 est mis sous pression (voir **figure 8****-E2a).** Dès que l'écart de pression entre la cavité de stockage C₀ et la cavité de dosage C dépasse en valeur absolue l'écart de pression seuil de la valve 12, une première quantité Q de liquide à doser 20 traverse la valve 12 et pénètre dans la cavité C de la capsule doseuse 1.
Puis, préférablement, pour des raisons de facilitation de manipulation, l'opérateur relâche la première pression P, de sorte que, le corps 23 retrouvant sa position initiale, le volume de la cavité de stockage C₀ augmente (voir **figure 8****-E2b**). Parallèlement, un certain volume d'air passe de la cavité C au flacon 20, pour équilibrer les pressions. A nouveau, plus aucun liquide à doser 20 ne traverse la valve 12.
En outre avec la première graduation 10a, l'opérateur peut évaluer la quantité Q précisément. L'opérateur peut répéter l'étape E2 autant de fois que nécessaire.
Ainsi, à la fin de l'étape E2, la quantité Q est généralement supérieure ou égale à la quantité souhaitée Qs.

Dans une étape **E3** dite de « mise à l'endroit », l'opérateur positionne l'ensemble 1, 2 avec la cavité de stockage C₀ au-dessous de la cavité de dosage C pour que le liquide présent dans la capsule doseuse 1 vienne au contact de la valve 12 (voir **figures 8****-E3a, 8-E3b**). Grâce aux lèvres souples 121 élastiques et à mémoire de forme, aucun liquide à doser 20 ne traverse la valve 12 pour passer de la cavité C au flacon 2.

Si la quantité Q correspond à la quantité souhaitée Qs ou est suffisamment proche pour être considérée comme équivalente, l'opérateur effectue alors l'étape **E4,** explicité plus tard.

En revanche, si la quantité Q est inférieure à la quantité souhaitée Qs, alors l'opérateur reprend à l'étape **E2.** Cela est très peu probable vu que l'opérateur pouvait ajuster en temps réel la quantité Q grâce à la première graduation 10a.

Si la quantité Q est supérieure à la quantité souhaitée Qs, alors l'opérateur, dans une étape **E3',** exerce une deuxième pression P' sur le corps 23 du flacon 2, de sorte que du gaz contenu dans la cavité de stockage C₀ est mis sous pression (voir **figure 8****-E3'a).** Dès que l'écart de pression entre la cavité de stockage C₀ et la cavité de dosage C dépasse l'écart de pression seuil, le gaz pénètre dans la capsule doseuse 1 *via* la valve 12.
Ensuite, l'opérateur relâche la deuxième pression P'. Le corps 23, en retrouvant sa position initiale, crée une dépression dans la cavité de stockage C₀ et cette dépression, créant un écart de pression en valeur absolue entre la cavité de stockage C₀ et la cavité de dosage C supérieur à l'écart de pression seuil, provoque l'aspiration d'une partie du liquide à doser 20 contenu dans la capsule doseuse 1 à travers la valve 12, cette partie du liquide à doser 20 retournant dans la cavité de stockage C₀ du flacon 2 (voir **figure 8****-E3'b**). Ainsi, on peut ainsi ajuster la quantité Q de liquide à doser 20 présent dans la cavité C pour obtenir une quantité ajustée Q'.
Grâce à la deuxième graduation 10b, il est possible de contrôler précisément la quantité ajustée Q'. L'opérateur peut répéter l'étape E3' autant de fois que nécessaire.
Ainsi, à la fin de l'étape E3', la quantité ajustée Q' est généralement inférieure ou égale à la quantité souhaité Qs, et le plus souvent égale.

Si la quantité Q ou la quantité ajustée Q' correspond à la quantité souhaitée Qs ou est suffisamment proche pour être considérée comme équivalente, l'opérateur effectue l'étape **E4.**

Préalablement, soit l'opérateur laisse la capsule doseuse 1 sur le flacon 2, soit il enlève la capsule doseuse 1 du flacon 2 puis met en place le capuchon amovible 123a qui obture les lèvres souples 121 de la valve 12, de sorte que l'opérateur peut garder la quantité Q ou la quantité ajustée Q' dans la capsule doseuse le temps qu'il le souhaite, sans craindre aucun fuite.
Lorsqu'il souhaite utiliser le liquide à doser 20 contenu dans la capsule doseuse 1, l'opérateur enlève le bouchon 11 (voir **figure 8****-E4a**), typiquement en le dévissant, et peut disposer de la quantité souhaitée Qs, typiquement en la versant dans un récipient pour un mélange ou autre (voir **figure 8****-E4b**). Dans le cas où le flacon 2 est toujours solidaire de la capsule doseuse 1, grâce aux lèvres souples 121 à mémoire de forme, aucun liquide à doser 20 de la cavité de stockage C₀ ne traverse la valve 12 lors de cette étape.

En revanche, si la quantité ajustée Q' est inférieure à la quantité souhaitée Qs, alors l'opérateur renouvelle l'étape **E1.**

Naturellement, les étapes **E1, E2, E3** et **E4** peuvent suffire, mais elles sont avantageusement complétées par l'étape **E3'** afin de pouvoir ajuster la dose.

Le procédé décrit permet donc d'obtenir une dose ajustable un nombre indéfini de fois. Ainsi, en cas d'une quantité Q trop élevée, il est possible de rectifier la dose sans devoir jeter le produit ou tenter une manipulation qui peut être risquée pour réintégrer le liquide à doser 20 depuis la cavité C dans le flacon 2.

Les étapes **E2** et **E3'** sont plus aisées avec le bouchon 11 comprenant la membrane semi-perméable 115. En effet, ladite membrane semi-perméable 115 permet les échanges gazeux avec l'extérieur, ce qui facilite et accélère les opérations de dosage et les rend plus précises et contrôlables.

En particulier, grâce à la membrane semi-perméable 115, l'opérateur peut injecter plus de fluide à doser par pression P, P', typiquement avec la main, d'où un gain d'énergie musculaire et de temps.

Inversement, avec le bouchon 11 étanche aux liquides et aux gaz, les étapes **E2** et **E3'** nécessitent une pression exercée par l'opérateur légèrement supérieure et la quantité de liquide à doser 20 qui traverse la valve 12 à chaque pression P, P' est un peu plus faible. Néanmoins, l'opérateur n'est exposé à aucun liquide à doser 20, ni aucun dégagement gazeux lors des opérations de dosage. Or, comme ces opérations nécessitent de renverser l'ensemble 1, 2 et donc d'agiter le liquide à doser 20, le risque de projection de liquide et de dégagement gazeux est important si le bouchon 11 n'est pas étanche aux liquides et aux gaz.

La capsule doseuse 1, associé à un tel procédé de dosage, permet de doser d'une façon ajustable un liquide contenu dans n'importe quel flacon sur lequel la capsule peut être fixée.

Les opérations de remplissage et de fermeture de l'ensemble 1,2 sont effectuées de la manière suivante.

Selon une première étape, du liquide à doser 20 est introduit dans la cavité de stockage C₀ par l'ouverture du goulot.

Selon une deuxième étape, la capsule doseuse 1 est vissée sur le goulot 21 afin de fermer le flacon 2.

L'utilisation de la capsule doseuse 1 proposée permet d'assembler l'ensemble 1, 2 en une seule opération de vissage, sur une ligne de remplissage conventionnelle.

## Revendications

1. Capsule doseuse (1) adaptée pour être montée sur un flacon (2) comprenant une cavité de stockage (C₀) contenant un liquide à doser (20), la capsule doseuse (1) comprenant :
- une paroi latérale (10) entourant une cavité de dosage (C), la paroi comprenant une partie inférieure (102) et une partie supérieure (101) ;
- une ouverture supérieure (101a) dans la partie supérieure (101) pour délivrer le liquide contenu dans la cavité de dosage (C),
- une ouverture inférieure (102a) dans la partie inférieure (102),
- un bouchon (11) adapté pour être fixé sur la paroi latérale (10) de manière à empêcher un échappement du liquide à doser depuis la cavité de dosage (C) via l'ouverture supérieure (101a),
- une valve (12) comprenant des lèvres souples (121) propre à prendre sélectivement
■ une position fermée dans laquelle les lèvres souples interdisent un passage du liquide à doser entre la cavité de stockage et la cavité de dosage via l'ouverture inférieure, lorsqu'un écart de pression de part et d'autre des lèvres souples, en valeur absolue, est inférieure à un écart de pression seuil est appliqué sur les lèvres souples ; ou
■ une position ouverte dans laquelle les lèvres souples autorisent un passage du liquide à doser et de gaz entre la cavité de stockage et la cavité de dosage via l'ouverture inférieure lorsqu'un écart de pression de part et d'autre des lèvres souples, en valeur absolue, supérieur à l'écart de pression pression seuil est appliqué sur les lèvres souples ; et
- une bague de fixation (131) solidaire de la paroi latérale et adaptée pour fixer la capsule doseuse (1) de façon étanche au flacon (2).

2. Capsule doseuse (1) selon la revendication 1, dans laquelle le bouchon (11) obture l'ouverture supérieure (101a) de façon étanche aux gaz.

3. Capsule doseuse (1) selon la revendication 1, dans laquelle le bouchon (11) comprend un orifice de dégazage (114) et une membrane semi-perméable (115), étanche au liquide à doser (20) et perméable aux gaz, ladite membrane (115) obturant l'orifice de dégazage (114).

4. Capsule doseuse (1) selon l'une quelconque des revendications précédentes, dans laquelle la bague (131) comprend un filet interne (131a), le filet interne (131a) permettant de visser la capsule doseuse (1) sur le flacon (2).

5. Capsule doseuse (1) selon l'une quelconque des revendications précédentes, dans laquelle le bouchon (11) comprend un filet interne (112a) et la paroi latérale (10) comprend un filet externe (101b), les filets interne (112a) et externe (101b) étant propres à coopérer pour visser le bouchon sur la paroi latérale (10).

6. Capsule doseuse (1) selon l'une quelconque des revendications précédentes, dans laquelle la paroi latérale (10) comprend des graduations (10a, 10b) pour mesurer la quantité de liquide à doser (20) contenu dans la cavité de dosage (C).

7. Capsule doseuse (1) selon l'une quelconque des revendications précédentes, dans laquelle la paroi latérale (10) est en polycarbonate, en polyester ou en polypropylène clarifié.

8. Capsule doseuse (1) selon l'une quelconque des revendications précédentes, dans laquelle la bague de fixation (131) et la paroi latérale (10) sont formées en une seule pièce de matière.

9. Capsule doseuse (1) selon la revendication 8, dans laquelle la bague (131) et la paroi latérale (10) sont formées en une seule opération de moulage.

10. Capsule doseuse (1) selon l'une quelconque des revendications précédentes, dans laquelle la valve (12) est fixée à la partie inférieure (102) de la paroi latérale (10) par encliquetage ou par soudure ou par assemblage.

11. Capsule doseuse (1) selon l'une quelconque des revendications précédentes, comprenant un capuchon (123) propre à être fixé de manière amovible sur la valve (12) pour étanchéifier les lèvres souples (121) afin d'empêcher un passage de liquide à doser en cas d'ouverture de la valve (12).

12. Ensemble doseur comprenant un flacon (2) comprenant une cavité de stockage (C₀) contenant un liquide à doser (20), et une capsule doseuse (1) selon l'une quelconque des revendications précédentes.

13. Ensemble selon la revendication 12, dans lequel le flacon comprend un goulot (21) présentant un filet (22) et dans lequel la bague de fixation (131) comprend un filet interne (131a), le filet interne (131a) permettant de visser la capsule doseuse (1) sur le goulot (21).

14. Ensemble selon l'une des revendications 12 et 13, dans lequel le flacon (2) comprend un corps (23) formé en un matériau élastique.

15. Procédé de dosage d'une quantité souhaitée (Qs) de liquide à doser (20) à l'aide d'un ensemble doseur (1,2) selon l'une des revendications 12 à 14, dans lequel un opérateur effectue les étapes suivantes :
- E1 : positionnement de l'ensemble (1,2) avec la cavité de stockage (C₀) au-dessus de la cavité de dosage (C), de sorte que le liquide de la cavité de stockage vienne au contact de la valve (12) ;
- E2 : exercice d'une première pression (P) sur le flacon (2) tendant à diminuer un volume de la cavité de stockage (C₀), de sorte qu'une première quantité (Q) de liquide à doser traverse la valve et pénètre dans la cavité de dosage (C);
- E3 : positionnement de l'ensemble (1,2) avec la cavité de stockage au-dessous de la cavité de dosage (C), la valve (12) empêchant le liquide à doser (20) contenu dans la cavité (C) de retourner dans la cavité de stockage (C₀);
- E4 : retrait du bouchon (11) et récupération du liquide à doser contenu dans la cavité de dosage (C) via l'ouverture supérieure (101a), notamment par versement.

16. Procédé selon la revendication 15, dans lequel, après l'étape E2, l'opérateur effectue une étape de :
- relâchement de la pression sur le flacon (2) de sorte que le volume de la cavité de stockage (C₀) augmente.

17. Procédé de dosage selon l'une des revendications 15 et 16, comprenant en outre l'étape E3' entre les étapes E3 et E4, dans le cas où la première quantité (Q) de liquide à doser (20) est supérieure à la quantité souhaitée (Qs), dans laquelle l'opérateur:
- exerce une pression (P') sur le flacon (2), de sorte que du gaz contenu dans la cavité de stockage traverse la valve (12) ; puis relâche la deuxième pression (P') sur le flacon (2) générant une dépression dans la cavité de stockage, de sorte qu'une partie du liquide à doser (20) contenu dans la cavité de dosage (C) traverse la valve (12) et retourne dans la cavité de stockage, et qu'il reste dans la cavité de dosage (C) une deuxième quantité (Q') de liquide à doser (20).

18. Procédé de dosage selon la revendication 17, dans lequel l'opérateur renouvelle l'étape E1 à la suite de l'étape E3' si la deuxième quantité (Q') de liquide à doser (20) est inférieure à la quantité souhaitée (Qs).
